# EUROPÄISCHE PATENTSCHRIFT

(11) **EP 1 262 706 B1**
(45) Veröffentlichungstag und Bekanntmachung des Hinweises auf die Patenterteilung: **16.05.2007**
(21) Anmeldenummer: 02011754.5
(22) Anmeldetag: 27.05.2002
(51) Int. Cl.: F16L 37/20, F16L 23/06, F16L 23/16

(54) **Kupplung zur koaxialen Verbindung von Schlauchleitungen**
Coupling for coaxially joining hoses
Raccord pour relier coaxialement des tuyaux flexibles

(30) Priorität: 01.06.2001 DE 20109255 U
(43) Veröffentlichungstag der Anmeldung: 04.12.2002
(73) Patentinhaber: SKP Konstruktion und Service GmbH, 88699 Frickingen (DE)
(72) Erfinder: Müller, Klaus, 88682 Salem/Beuren (DE)
(74) Vertreter: Koch, Günther

(56) Entgegenhaltungen:
- FR-A- 577 782
- US-A- 2 643 139
- US-A- 4 613 163
- US-A- 5 636 878
- US-A- 6 039 319
- US-B1- 6 234 545

## Beschreibung

Die Erfindung bezieht sich auf eine Schlauchkupplung, wie sie beispielsweise in der Bauindustrie Verwendung findet. Diese Kupplungen weisen im allgemeinen einen Mutterteil und einen Vaterteil auf, die auf die Schlauchenden aufgesetzt und gegeneinander verspannt sind. Derartige Kupplungen haben den Nachteil, daß nicht beliebige Schlauchenden miteinander verbunden werden können, weil nur jeweils ein Mutterteil mit einem Vaterteil zusammenpaßt.

Es sind auch bereits Leitungskupplungen mit einander identischen Kupplungshälften bekannt, bei denen in den Stirnseiten der Kupplungsflansche Dichtungsringe angeordnet sind. So zeigt z.B. die US-A-6 234 545 in den Fig. 1 bis 4 stirnseitig aneinander fügbare identisch ausgebildete Kupplungshülsen, die allerdings als Teil starrer Rohre oder als getrennte zylindrische Hülsen ausgebildet sind, die auf den Rohrenden aufgeschweißt werden müssen. Eine Spannvorrichtung greift an entsprechenden Flanschen der Rohre oder an den zylindrischen Hülsen an. Die Kupplungshälften werden durch einen radial aufsetzbaren Spannring gegeneinander verklemmt, wobei in stirnseitige Nuten der beiden Flansche ein Dichtring eingesetzt ist. Für eine Schlauchverbindung wäre eine solche Kupplung nicht geeignet.

Die US-A-4 613 163, siehe Oberbegriff des Anspruchs 1, zeigt eine Leitungsverbindung für Metallrohre, die mit einer deformierbaren Plastikauskleidung versehen sind. An der Verbindungsstelle sind die beiden Leitungsenden nach außen zu einem Flansch derart ausgebreitet, daß die Stirnringflächen der abgebogenen Plastikauskleidung aneinander liegen. Auf die derart ausgeformten Leitungsenden sind lose Kupplungsringe aufgesetzt, deren Stirnflächen mit einer Paßnut bzw. einer Paßfeder ausgestattet sind, die zur Zentrierung ineinander greifen und die durch eine im Querschnitt V-förmige Klemme axial gegeneinander verspannt werden und dadurch auch die ausgebreiteten Enden der Leitungen dichtend gegeneinander pressen. Die Kupplungsringe sind auf den axialen Endabschnitten der Leitung lediglich aufgeschoben, ohne daran befestigt zu sein. Infolge der abgebogenen Leitungsenden ergibt sich an den Flanschabbiegungen ein Querschnittssprung, der die Förderung des Gutes beeinträchtigt. Die Kupplungsringe sind unterschiedlich ausgebildet, so daß immer zwei ungleiche Teile an einer Kupplungsstelle benutzt werden müssen.

Die FR-A-577 782 zeigt eine Kupplungsverbindung von zwei Leitungen, bei der zwei an den Leitungsenden festlegbare Kupplungshülsen vorgesehen sind, die durch Bolzen gegeneinander verspannt werden können. Die Paßverbindung und die Abdichtung zwischen den Stirnseiten der Flansche erfolgt durch einen axial vorstehenden Ringsteg des einen Flansches, der in eine Ringnut des anderen Flansches einsteht. Der Ringsteg weist eine V-förmige Nut auf, wodurch zwei axial vorstehende V-förmige Ringstege gebildet werden, die bei der Verspannung der Flansche durch abgeschrägte Nutwandungen des Gegenstückes nach innen deformiert werden und dabei eine elastische Abdichtung bewirken sollen. Die beiden zu verbindenden Flansche sind unterschiedlich ausgebildet und an der Kupplungsstelle können jeweils nur zwei derartige zueinander passende Teile miteinander verbunden werden.

Der Erfindung liegt die Aufgabe zugrunde, eine Schlauchkupplung identisch ausgebildeter Kupplungshälften zu schaffen, die eine gute koaxiale Ausrichtung der beiden Kupplungshälften und der Schlauchenden gewährleistet, einfach auf den Schlauchenden montierbar, schnell kuppelbar und entkuppelbar ist, einen dem Schlauchinnendurchmesser entsprechenden glatten Durchgangsquerschnitt aufweist und ohne zusätzliche Dichtringe im gekuppelten Zustand eine dichte Verbindung gewährleistet.

Gelöst wird die gestellte Aufgabe durch die Gesamtheit der im Patentanspruch 1 angegebenen Merkmale. Gegenüber dem Stande der Technik unterscheidet sich die Erfindung vorteilhaft dadurch, daß die Abdichtung im Kupplungsbereich ohne zusätzliche Dichtungsringe durch die stirnseitig gegenüberliegenden Schlauchenden bewirkt wird, die durch die Zentriereinrichtung in den Flanschen axial aufeinander ausrichtbar sind und so axial gegeneinander dichtend verspannt werden können.

Die beiden Kupplungsteile sind einander identisch ausgebildet, so daß an beiden Enden der Schläuche immer gleiche Kupplungsstücke zur Verfügung stehen, die jeweils miteinander verbindbar sind.

Durch die Paßstiftverbindung wird eine exakte koaxiale Ausrichtung bewirkt, und die elastisch wirkenden Spannmittel gewährleisten eine zuverlässige stirnseitige Abdichtung zwischen den zu verbindenden Schlauchleitungen.

Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:
Fig. 1 ist ein Axialschnitt der Schlauchkupplung;
Fig. 2 ist eine Stirnansicht einer Kupplungshülse der Schlauchkupplung gemäß Fig. 1.

Die Schlauchkupplung besteht aus zwei identisch geformten Kupplungshülsen 10 und weiter unten im einzelnen beschriebenen Spannschlössern, die die beiden Kupplungshülsen axial gegeneinander verspannen.

Jede Kupplungshülse ist auf einem Ende eines Schlauches 12 festgelegt. Die Festlegung kann dadurch erfolgen, daß die Kupplungshülse 10 mit einem Innengewinde 14 versehen ist, das auf dem Schlauch aufgeschraubt wird. Weiter sind durch radiale Bohrungen jeder Kupplungshülse Sechskantschrauben in den Schlauch 12 eingeschraubt. Diese Schrauben sind zweckmäßigerweise im Winkelabstand von 120° über den Umfang verteilt. Stattdessen oder zusätzlich kann jede Kupplungshülse mittels eines Spezialklebers auf dem Schlauchende festgelegt werden. Die beiden Schlauchenden werden durch die axiale Verspannung stirnseitig dichtend aufeinandergepreßt. Zu diesem Zweck können die Kupplungshülsen derart auf das Schlauchende aufgesetzt werden, daß die Stirnringflächen der elastisch kompressiblen Schlauchenden um einen gewissen Betrag über die Trennfuge vorstehen, wodurch nach der Verspannung durch die Spannschlösser 28 eine zuverlässige Dichtung erreicht wird. Der Durchlaßquerschnitt an der Kupplungsstelle entspricht dem Querschnitt der Schläuche.

Jede Kupplungshülse 10 weist einen Stirnflansch 18 auf, der radial außen einen Ringkonus 20 besitzt. In der Stirnringfläche eines jeden Stirnflansches 18 ist eine axiale Ringnut 22 vorgesehen, die gemäß dem Ausführungsbeispiel im Querschnitt rechteckig ausgebildet ist. In jeder Kupplungshülse sind in der Ringnut 22 im Winkelabstand von 120° axial verlaufende Zylinderstifte 24 eingesetzt, deren Durchmesser der Nutbreite entspricht und die über die Stirnfläche der Stirnflansche 18 vorstehen und im gekuppelten Zustand als Paßstifte in die Ringnut 22 der gegenüberliegenden Kupplungshülse eingreifen. Der Querschnitt der Ringnut 22 und/oder der vorstehende Kopf der Zylinderstifte 24 könnte auch konisch ausgebildet sein, um das Zusammenstecken zu erleichtern.

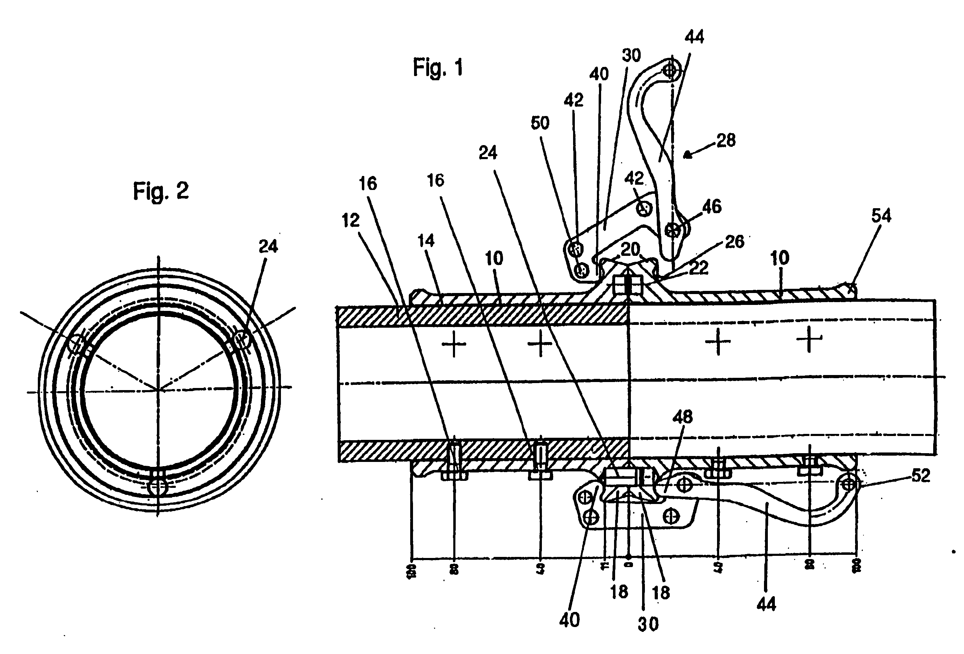

Auf der Rückseite ist jeder Stirnflansch 18 mit einer axialen Ringausnehmung 26 versehen, die im Querschnitt gewölbt ausgebildet ist und zur Abstützung der Spannschlösser 28 dient. Gemäß dem dargestellten Ausführungsbeispiel sind zwei um 180° versetzte Spannschlösser vorgesehen. Es können jedoch auch mehrere, beispielsweise drei, Spannschlösser angeordnet werden. Jedes Spannschloß 28 besteht aus einem Klemmbügel 30, der zwei über Distanzbolzen 42 im Abstand zueinander angeordnete Bügelteile aufweist, zwischen denen über einen Gelenkstift 46 ein Spannhebel 44 gelagert ist. Die Klemmbügel 30 weisen einen Lageransatz 40 auf, der in der Ringausnehmung 26 des einen Stirnflansches abgestützt ist, während ein Spannfinger 48 am Ende des Spannhebels 44 in die Ringausnehmung 26 des anliegenden Stirnflansches eingreift. Die Bemessung der Spannschlösser ist derart getroffen, daß durch die beim Umlegen der Spannhebel 44 erfolgte Verspannung die Stirnflansche 18 axial gegeneinander verspannt werden, wobei zwischen den Stirnringflächen der Schläuche die erforderliche Dichtung zustandekommt. Im umgelegten Zustand gemäß der Darstellung auf der unter der Achse liegenden Seite gemäß Fig. 1 ist der Spannhebel 44 über die Totpunktstellung nach innen umgelegt und dadurch gesichert.

Die mit dem Lageransatz 40 versehenen Enden der Klemmbügel 30 können durch radial nach innen wirkende Federmittel an der Ringausnehmung 26 nach innen vorgespannt sein, wodurch sich eine axiale auf die Kupplungshülsen einwirkende Vorspannung ergibt. Diese radialen Federmittel können von einer in der Zeichnung nicht dargestellten Zugschraubenfeder gebildet werden, die in einem Ankerloch 50 benachbart zum Lageransatz 40 eines jeden Klemmbügels 30 eingehängt ist und in Umfangsrichtung zum nächsten Klemmbügel 30 verläuft. Weiterhin können Federmittel vorgesehen werden, die zur Sicherung des Spannhebels 44 diesen in der Spannstellung halten. Diese Federmittel können beispielsweise von dem Ende der die Kupplungshülsen 10 umschlingenden Schraubenfedern gebildet werden, deren Enden in einem Loch 52 am Ende des Spannhebels 44 eingehängt sind und diesen radial nach innen vorspannen, so daß dieser am Endflansch 54 der Kupplungshülse 10 zu liegen kommt und in dieser Stellung gesichert ist.

Vorstehend wurde die Erfindung anhand einer Kupplungsverbindung beschrieben, mit der Schläuche, beispielsweise Mörtelschläuche, miteinander verbunden werden. Die Erfindung ist jedoch auch anwendbar zur Verbindung starrer oder halbstarrer Rohre.

### Bezugszeichenliste

- 10: Kupplungshülse
- 12: Schlauch
- 14: Innengewinde
- 16: Sechskantschrauben
- 18: Stirnflansch
- 20: Ringkonus
- 22: axiale Ringnut
- 24: Zylinderstift
- 26: Ringausnehmung
- 28: Spannschloß
- 30: Klemmbügel
- 40: Lageransatz
- 42: Distanzbolzen
- 44: Spannhebel
- 46: Gelenkstift
- 48: Spannfinger
- 50: Ankerloch
- 52: Loch
- 54: Endflansch

## Patentansprüche

1. SChlauchkupplung mit zwei stirnseitig aneinander gefügten elastisch kompressiblen Schlauchenden (12), **gekennzeichnet durch** zwei gleich ausgebildete Kupplungshülsen (10) und Spannschlössem (28), bei welcher Schlauchkupplung
die beiden Kupplungshülsen (10) auf den beiden Schlauchenden (12) derart festgelegt sind, daß die Stirnflächen dieser Schlauchenden (12) um einen gewissen Betrag über die Trennfuge vorstehen,
die Stirnringflächen der beiden Stirnflansche (18) der Kupplungshülsen (10) eine Ringnut (22) aufweisen,
in die Ringnuten (22) axiale Paßstifte (24) eingesetzt sind, deren aus der Trennebene vorstehende Enden in die Ringnut (22) des Gegenstückes einpassen, und
die elastisch wirkenden Spannschlösser (28) die Stirnflansche (18) der Kupplungshülsen (10) axial gegeneinander vorspannen und **dadurch** eine stirnseitige Abdichtung zwischen den Stirnringflächen der Schlauchenden (12) bewirken.

2. Schlauchkupplung nach Anspruch 1,
**dadurch gekennzeichnet, daß** die Kupplungshülsen (10) auf die Schlauchenden (12) mittels eines Innengewindes (14) aufschraubbar sind.

3. Schlauchkupplung nach Anspruch 1,
**dadurch gekennzeichnet, daß** die Kupplungshülsen (10) auf die Schlauchenden (12) mit einem Kleber festlegbar sind.

4. Schlauchkupplung nach Anspruch 1,
**dadurch gekennzeichnet, daß** die Ringnuten (22) im Querschnitt rechteckig ausgebildet sind und daß die Paßstifte (24) als Zylinderstifte mit einem Durchmesser ausgebildet sind, der der Breite der Ringnut (22) entspricht.

5. Schlauchkupplung nach Anspruch 1,
**dadurch gekennzeichnet, daß** die axiale Ringnut abgeschrägte Ränder aufweist und/oder daß die Paßstifte (24) konisch ausgebildet sind, derart, daß bei der axialen Verspannung eine koaxiale Ausrichtung erfolgt.

6. Schlauchkupplung nach einem der Ansprüche 1 bis 5,
**dadurch gekennzeichnet, daß** mehrere Paßstifte (24) im gleichen Winkelabstand in der axialen Ringnut (22) angeordnet sind.

7. Schlauchkupplung nach Anspruch 6,
**dadurch gekennzeichnet, daß** jeweils drei Paßtstifte (24) im Winkelabstand von 120° in den Ringnuten (22) angeordnet sind.

8. Schlauchkupplung nach Anspruch 1,
**dadurch gekennzeichnet, daß** jedes Spannschloß (28) aus einem Klemmbügel (30) besteht, der mit einem Lageransatz den Stirnflansch (18) des einen Kupplungsteils hintergreift und mit einem angelenkten Spannhebel (44) an der Rückseite des gegenüberliegenden Stirnflansches (18) angreift.

9. Schlauchkupplung nach Anspruch 8,
**dadurch gekennzeichnet, daß** die Rückseite der Stirnflansche (18) eine Ringausnehmung (26) aufweist, die als Lagerfläche für die Teile des Spannschlosses gewölbt ausgebildet ist.

10. Schlauchkupplung nach den Ansprüchen 8 und 9,
**dadurch gekennzeichnet, daß** der Spannhebel (44) am Spannschloß derart angelenkt ist, daß er in Spannstellung über die Totpunktstellung verschwenkt am Endflansch (54) des Kupplungsteils anliegt.

11. Schlauchkupplung nach den Ansprüchen 8 bis 10,
**dadurch gekennzeichnet, daß** der Lageransatz (40) des Klemmbügels (30) durch Federmittel radial nach innen vorgespannt ist.

12. Schlauchkupplung nach Anspruch 11,
**dadurch gekennzeichnet, daß** die Kupplungshülse außen umschlingende Zuschraubenfedem vorgesehen sind, deren Enden in der Nähe des Lageransatzes (40) der Klemmbügel angreifen.

13. Schlauchkupplung nach den Ansprüchen 8 bis 12,
**dadurch gekennzeichnet, daß** der Spannhebel (44) des Spannschlosses (28) radial nach innen durch eine Feder vorgespannt ist.

14. Schlauchkupplung nach den Ansprüchen 12 und 13,
**dadurch gekennzeichnet, daß** die Vorspannfeder des Spannhebels (44) vom Ende der am Klemmbügel (30) verankerten Zugschraubenfeder gebildet wird.

## Claims

1. Pipe coupling with two elastically compressible pipe ends (12) joined to each other end to end, **characterized by** two identically formed coupling sleeves (10) and turnbuckles (28), in which pipe coupling
the two coupling sleeves (10) are fixed on the two pipe ends (12) in such a way that the end-surfaces of these pipe ends (12) project by a certain amount over the parting line,
the end ring surfaces of the two end flanges (18) of the coupling sleeves (10) have an annular groove (22),
axial fitting pins (24) are inserted into the annular grooves (22), the ends of which projecting from the parting plane fit the annular groove (22) of the counterpart, and
the elastic-action turnbuckles (28) prestress the end flanges (18) of the coupling sleeves (10) axially towards each other and thereby effect an end sealing between the end ring surfaces of the pipe ends (12).

2. Pipe coupling according to claim 1,
**characterized in that** the coupling sleeves (10) can be screwed onto the pipe ends (12) by means of an internal thread (14).

3. Pipe coupling according to claim 1,
**characterized in that** the coupling sleeves (10) can be fixed onto the pipe ends (12) with an adhesive.

4. Pipe coupling according to claim 1,
**characterized in that** the annular grooves (22) are formed rectangular in cross section and **in that** the fitting pins (24) are formed as straight pins with a diameter which corresponds to the width of the annular groove (22).

5. Pipe coupling according to claim 1,
**characterized in that** the axial annular groove has bevelled edges and/or **in that** the fitting pins (24) are formed conical, such that a coaxial alignment takes place upon axial prestressing.

6. Pipe coupling according to one of claims 1 to 5,
**characterized in that** several fitting pins (24) are arranged with the same angular distance in the axial annular groove (22).

7. Pipe coupling according to claim 6,
**characterized in that** in each case three fitting pins (24) are arranged in the annular grooves (22) with an angular distance of 120°.

8. Pipe coupling according to claim 1,
**characterized in that** each turnbuckle (28) consists of a clamping bracket (30) which engages with a bearing shoulder behind the end flange (18) of the one coupling part and engages with an articulated clamping lever (44) at the back of the opposite end flange (18).

9. Pipe coupling according to claim 8,
**characterized in that** the back of the end flange (18) has an annular recess (26) which is formed arched as bearing surface for the parts of the turnbuckle.

10. Pipe coupling according to claims 8 and 9,
**characterized in that** the clamping lever (44) is articulated to the turnbuckle such that, swivelled in clamping position over the dead-centre position, it lies against the end-flange (54) of the coupling part.

11. Pipe coupling according to claims 8 to 10,
**characterized in that** the bearing shoulder (40) of the clamping bracket (30) is prestressed radially inwards by spring means.

12. Pipe coupling according to claim 11,
**characterized in that** tension bolt springs looping round the coupling sleeve on the outside are provided, the ends of which engage in the vicinity of the bearing shoulder (40) of the clamping brackets.

13. Pipe coupling according to claims 8 to 12,
**characterized in that** the clamping lever (44) of the turnbuckle (28) is prestressed radially inwards by a spring.

14. Pipe coupling according to claims 12 and 13,
**characterized in that** the prestressing spring of the clamping lever (44) is formed by the end of the tension bolt spring anchored to the clamping bracket (30).

## Revendications

1. Raccord flexible avec deux extrémités de tuyaux flexibles (12) compressibles élastiquement, assemblées l'une avec l'autre du côté frontal, **caractérisé par** deux manchons d'accouplement (10) de même configuration et des tendeurs (28), raccord flexible dans lequel
les deux manchons d'accouplement (10) sont fixés sur les deux extrémités de tuyaux flexibles (12) de telle manière que les faces frontales de ces extrémités de tuyaux flexibles (12) font saillie au-dessus du joint de séparation sur une certaine distance,
les faces frontales annulaires des deux brides frontales (18) des manchons d'accouplement (10) comportent une rainure annulaire (22),
des goujons d'ajustage axiaux (24), dont les extrémités faisant saillie hors du plan de séparation s'emboîtent dans la rainure annulaire (22) de la pièce conjuguée, sont insérés dans les rainures annulaires (22), et
les tendeurs (28) à effet élastique mettent les brides frontales (18) des manchons d'accouplement (10) axialement en précontrainte l'une contre l'autre et créent ainsi une étanchéité frontale entre les faces frontales annulaires des extrémités de tuyaux flexibles (12).

2. Raccord flexible selon la revendication 1, **caractérisé en ce que** les manchons d'accouplement (10) peuvent être vissés sur les extrémités de tuyaux flexibles (12) à l'aide d'un filet intérieur (14).

3. Raccord flexible selon la revendication 1, **caractérisé en ce que** les manchons d'accouplement (10) peuvent être fixées sur les extrémités de tuyaux flexibles (12) à l'aide d'un adhésif.

4. Raccord flexible selon la revendication 1, **caractérisé en ce que** les rainures annulaires (22) ont une section transversale rectangulaire et **en ce que** les goujons d'ajustage (24) sont configurés sous forme de goupilles cylindriques avec un diamètre qui correspond à la largeur de la rainure annulaire (22).

5. Raccord flexible selon la revendication 1, **caractérisé en ce que** la rainure annulaire axiale présente des bords chanfreinés et/ou **en ce que** les goujons d'ajustage (24) sont configurés en forme de cônes de telle manière qu'un alignement coaxial se produit lors de la contrainte axiale.

6. Raccord flexible selon l'une quelconque des revendications 1 à 5, **caractérisé en ce que** plusieurs goujons d'ajustage (24) sont disposés à la même distance angulaire dans la rainure annulaire axiale (22).

7. Raccord flexible selon la revendication 6, **caractérisé en ce que** trois goujons d'ajustage (24) sont respectivement disposés à une distance angulaire de 120° dans les rainures annulaires (22).

8. Raccord flexible selon la revendication 1, **caractérisé en ce que** chaque tendeur (28) est constitué d'un étrier de serrage (30) qui saisit à l'arrière la bride frontale (18) d'une partie de raccord avec un épaulement de palier et qui vient en prise avec le côté arrière de la bride frontale opposée (18) avec un levier tendeur articulé (44).

9. Raccord flexible selon la revendication 8, **caractérisé en ce que** le côté arrière de la bride frontale (18) présente un évidement annulaire (26) dont la configuration bombée constitue une surface d'appui pour les éléments du tendeur.

10. Raccord flexible selon les revendications 8 et 9, **caractérisé en ce que** le levier tendeur (44) est articulé sur le tendeur de telle manière que, dans la position de tension, il pivote au-dessus de la position de point mort pour s'appuyer sur la bride d'extrémité (54) de l'élément de raccord.

11. Raccord flexible selon les revendications 8 à 10, **caractérisé en ce que** l'épaulement de palier (40) de l'étrier de serrage (30) est mis sous précontrainte radialement vers l'intérieur par un dispositif de ressort.

12. Raccord flexible selon la revendication 11, **caractérisé en ce qu'**il est prévu des ressorts de vissage enroulés extérieurement autour du manchon d'accouplement dont les extrémités viennent en prise à proximité de l'épaulement de palier (40) de l'étrier de serrage.

13. Raccord flexible selon les revendications 8 à 12, **caractérisé en ce que** le levier tendeur (44) du tendeur (28) est mis sous précontrainte radialement vers l'intérieur par un ressort.

14. Raccord flexible selon les revendications 12 et 13, **caractérisé en ce que** le ressort de précontrainte du levier tendeur (44) est formé par l'extrémité des ressorts de vissage ancrés dans l'étrier de serrage (30).
